# EUROPEAN PATENT SPECIFICATION

(11) **EP 0 955 151 B1**
(45) Date of publication and mention of the grant of the patent: **25.06.2003**
(21) Application number: 98107647.4
(22) Date of filing: 27.04.1998
(51) Int. Cl.: B29C 65/10

(54) **Unit for heat sealing a sealing strip to a strip of packaging material for pourable food products**
Vorrichtung zum Schweissen eines Klebestreifens auf eine Verpackungsfolie für flüssige Nahrungsmittel
Dispositif pour le soudage d'une bande adhésive sur une feuille d'emballage pour produits alimentaires à l'état liquide

(43) Date of publication of application: 10.11.1999
(73) Proprietor: Tetra Laval Holdings & Finance SA, 1009 Pully (CH)
(72) Inventor: Roseberg, Bengt, 24391 Höör (SE)
(74) Representative: Jorio, Paolo

(56) References cited:
- EP-A- 0 395 836
- EP-A- 0 703 063
- EP-A- 0 816 052
- DD-A- 69 450
- DE-A- 1 504 987
- US-A- 2 749 966
- US-A- 2 953 976
- US-A- 4 673 383
- US-A- 4 909 870
- US-A- 4 913 772
- US-A- 4 957 571
- PATENT ABSTRACTS OF JAPAN vol. 009, no. 330 (M-442), 25 December 1985 -& JP 60 162626 A (SADAMI ITOU), 24 August 1985

## Description

The present invention relates to a unit for heat sealing a sealing strip to a strip of packaging material for pourable food products.

Many pourable food products, such as soft drinks, fruit juice, pasteurized or UHT (ultra-high-temperature treated) milk, wine, tomato sauce, etc., are sold in packages made of sterilized packaging material.

Typical examples of such a packages are the parallelepiped packaging containers for liquid or pourable food products known by the name of Tetra Brik® and Tetra Brik Aseptic (registered trademark), which is formed by folding and sealing a strip-rolled packaging material.

The packaging material comprises layers of fibrous material, e.g. paper, covered on both sides with thermoplastic material, e.g. polyethylene. This material is used for manufacturing non-aseptic packages containing pasteurized milk, pasteurized fruit juice, etc.. In aseptic packages, the side of the packaging material eventually contacting the food product in the package - hereinafter referred to simply as the inner plastic layer - also has a sheet of barrier material, e.g. aluminium, which is also coated with thermoplastic material.

As is known, such packages are produced on fully automatic packaging machines, on which a continuous tube is formed from the strip-fed packaging material; the strip of packaging material for manufacturing aseptic packages is sterilized on the packaging machine, e.g. by applying a chemical sterilizing agent, such as a hydrogen peroxide solution; following sterilization, the sterilizing agent is removed, e.g. vaporized by heating, from the surfaces of the packaging material; and the strip of packaging material so sterilized is kept in a closed sterile environment, and is folded and sealed longitudinally to form a continuous, vertically-fed tube which is subsequently filled with the food product.

Beforehand, a longitudinal edge of the inner plastic layer of the strip of packaging material is applied with a sealing strip of thermoplastic material, to which the packaging material is subsequently heat sealed to form the vertical tube.

The tube is then filled with the sterilized or sterile-processed food product, and is sealed and cut at equally spaced cross sections into pillow-pack packages, which are subsequently folded mechanically to form parallelepiped packages.

Packaging machines of the above type are known in which the sealing strip is normally applied to the inner plastic layer of the strip of packaging material at a pressing station to which the strip of packaging material, heated beforehand, and the sealing strip are fed along different paths, and where the sealing strip is pressed on to a longitudinal edge of the strip of packaging material.

The strip of packaging material is normally preheated by a hot-air nozzle located upstream from the pressing station and having a row of air supply orifices facing the strip of packaging material.

The pressing station normally comprises a pair of rollers, between which the preheated strip of packaging material and the sealing strip are rolled simultaneously. One such pressure station is known from EP-A-703063. As it is fed between the rollers, the strip of packaging material transfers part of its own heat to, and so softens, the sealing strip, so that the pressure exerted by the rollers seals the sealing strip to the strip of packaging material. Knonw from EP-A-816052 is a heat-sealing unit as defined in the preamble of claim 1.

The inner plastic layer of the packaging material to which the sealing strip is sealed must be of at least a given minimum thickness, to prevent the layer from overheating and so resulting in leakage of the product at the sealing strip.

It is an object of the present invention to provide a unit for heat sealing a sealing strip to a strip of packaging material for pourable food products, which provides, in a straightforward, low-cost manner, for employing packaging materials with an inner plastic layer of less than said minimum thickness.

According to the present invention, there is provided a heat-sealing unit as defined in claim 1.

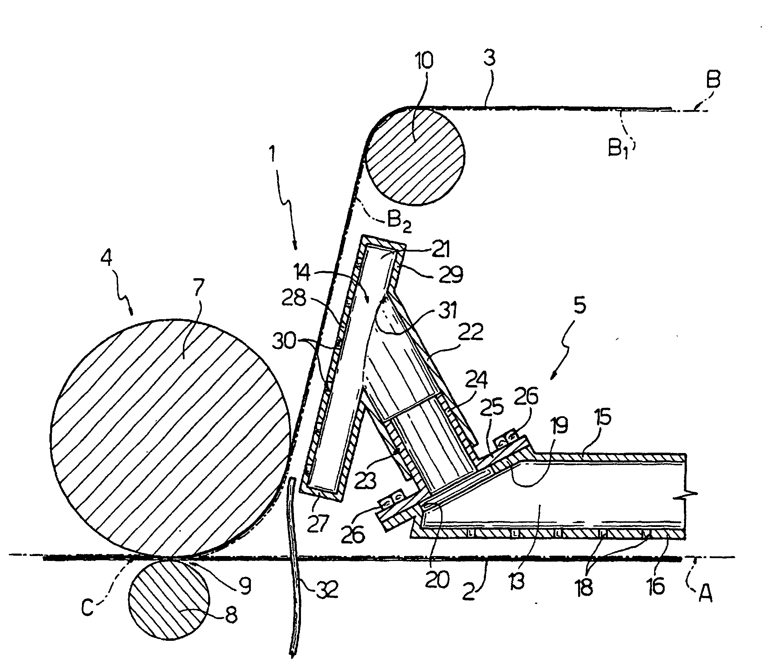

A preferred, non-limiting embodiment of the present invention will be described by way of example with reference to the accompanying drawing, which shows a section of a heat-sealing unit in accordance with the present invention.

Number 1 in the accompanying drawing indicates as a whole a unit for heat sealing a sealing strip 3 to a strip 2 of packaging material for pourable food products.

Unit 1 may be incorporated in a packaging machine (not shown) for continuously forming, from a tube of said packaging material, aseptic sealed packages (not shown) containing a pourable food product, such as pasteurized or UHT milk, fruit juice, wine, etc. More specifically, the tube is formed in known manner downstream from unit 1 by folding and sealing strip 2 of packaging material along sealing strip 3; is filled with the sterilized or sterile-processed food product for packaging; and is then sealed and cut into packages along equally spaced cross sections.

The packaging material comprises layers of fibrous material, e.g. paper, covered on both sides with thermoplastic material, e.g. polyethylene; and the side of the packaging material eventually contacting the contents of the package - hereinafter referred to simply as the inner plastic layer - also has a sheet of barrier material, e.g. aluminium, which is also coated with thermoplastic material. Sealing strip 3, on the other hand, is made of thermoplastic material.

By means of known devices (not shown), strip 2 and sealing strip 3 are fed respectively along a first and a second path A, B having a common portion C along which sealing strip 3 is heat sealed under pressure to a longitudinal edge of the inner plastic layer of strip 2.

More specifically, whereas path A is a straight horizontal path, path B comprises, in addition to portion C in common with path A, a straight upstream portion B₁ parallel to path A, and an oblique portion B₂ connecting portion B₁ to portion C.

Unit 1 comprises a pressing station 4 for pressing sealing strip 3 on to strip 2, and defining the common portion C of paths A and B; and a heat-treating device 5 for preheating strip 2 and sealing strip 3 along respective paths A and B upstream from pressing station 4.

Pressing station 4 comprises a pair of pressure rollers 7, 8 having respective parallel axes, rotating in opposite directions, and located adjacent to each other to define a small-section passage 9 through which strip 2 and sealing strip 3 are rolled simultaneously.

More specifically, in the illustrated example, one (7) of said pressure rollers is much larger in diameter than the other (8) though it should be noted that rollers having the same diameter may also be used. In the example shown, sealing strip 3 extends about the larger-diameter pressure roller 7, and about a guide roller 10 having an axis parallel to the axes of rollers 7, 8, and located at the junction of portions B₁ and B₂ of path B.

Heat-treating device 5 comprises a first and a second nozzle 13, 14 located upstream from portion C along respective paths A and B, and for respectively directing hot air on to strip 2 and sealing strip 3 to preheat both prior to rolling at pressure rollers 7, 8. More specifically, nozzle 14 is branch-connected to nozzle 13.

Nozzle 13 is formed on an end portion of a hot-air supply conduit 15, and comprises, facing strip 2, a substantially flat bottom wall 16 parallel to strip 2 and in turn comprising a number of through hot-air supply orifices 18.

Facing pressure roller 7, nozzle 13 is also defined by a substantially flat lateral wall 19 sloping with respect to wall 16, defining a connection for nozzle 14, and having a through hole 20 enabling air flow from nozzle 13 to nozzle 14.

Nozzle 14 comprises, integrally, a box portion 21 located along portion B₂ of path B, between guide roller 10 and pressure roller 7, and facing a respective portion of sealing strip 3; and a tubular end portion 22 extending from box portion 21 towards nozzle 13, and connected integrally to wall 19 by a fastening member 23.

More specifically, fastening member 23 comprises a tubular main portion 24 to which tubular portion 22 of nozzle 14 is interference fitted coaxially; and a peripheral end flange 25 fitted to wall 19 by means of a number of screws 26.

Box portion 21 of nozzle 14 is substantially parallelepiped, and comprises a lateral wall 27 closed on opposite sides by two base walls 28, 29, a first (28) of which is parallel to and faces sealing strip 3, and has a row of through air supply orifices 30, and the second (29) of which has a through hole 31 from the peripheral edge of which tubular portion 22 extends integrally.

In the event the packaging machine is arrested, heat-treating device 5 is moved, by known actuating means not shown, into a rest position in which nozzles 13, 14 are located to the side of and clear of strip 2 and sealing strip 3.

Unit 1 also comprises a further nozzle 32 for directing cold air between wall 28 of nozzle 14 and sealing strip 3, and which is activated during startup supply of sealing strip 3, until the steady operating speed is reached, to prevent sealing strip 3 from being damaged by overheating.

The advantages of unit 1 according to the present invention will be clear from the foregoing description.

In particular, by preheating sealing strip 3, strip 2 of packaging material need no longer transfer such a large amount of heat to sealing strip 3, and may therefore be heated to a temperature below the preheat temperature required of known heat-sealing units. This therefore enables the use of packaging materials with an inner plastic layer thinner than that of normally used packaging materials, and, in view of the large number of packages (several billion) produced yearly, provides for a significant reduction in the consumption of plastic material, and for advantages in terms of both cost and environment.

Clearly, changes may be made to unit 1 as described and illustrated herein without, however, departing from the scope of the accompanying Claims.

## Claims

1. A heat-sealing unit (1) for an automatic packaging machine wherein a strip (2) of packaging material for pourable food products and a sealing strip (3) are fed respectively along a first and a second path (A, B) having at least one common portion (C) along which said sealing strip (3) is heat sealed under pressure to a longitudinal edge of said strip (2) of packaging material; said unit (1) comprising first heating means located along said first path (A), upstream from said common portion (C), to preheat said strip (2) of packaging material, and second heating means located along said second path (B), upstream from said common portion (C), **characterized in that** said second heating means are arranged to preheat said sealing strip (3), **in that** said first heating means and said second heating means are connected in series with each other, and **in that** it further comprises a nozzle (32) for directing cold air between said second heating means (14) and said sealing strip (3), said nozzle (32) being selectively activated during startup supply of said sealing strip (3) along said second path (B).

2. A unit as claimed in Claim 1, **characterized in that** said first heating means comprise a first nozzle (13) located at an end portion of an hot air supply conduit (15), and **in that** said second heating means comprise a second nozzle (14) branch-connected to said first nozzle (13).

3. A unit as claimed in Claim 2, **characterized in that** said first nozzle (13) comprises a bottom wall (16) provided with hot air supply orifices (18) facing said strip (2) of packaging material, said second nozzle (14) comprising a first portion (21) having air supply orifices (30) facing said sealing strip (3) and a second portion (22) extending from said first portion (21) and branch-connected to said first nozzle (13).

## Patentansprüche

1. Aufschweißeinheit (1) für eine automatische Verpackungsmaschine, bei welcher ein streifen 82) aus Verpackungsmaterial für fließfähige Nahrungsmittelprodukte und ein Verschlussstreifen (3) jeweils entlang einer ersten Bahn und einer zweiten Bahn (A, B) mit mindestens einem gemeinsamen Abschnitt (C) zugeführt werden, entlang welchem der Verschlussstreifen (3) unter Druck auf eine Längskante des Streifens (2) aus Verpackungsmaterial aufgeschweißt wird, wobei die Einheit (1) eine erste Erwärmungseinrichtung aufweist, die sich entlang der ersten Bahn (A) auf der Zuführseite des gemeinsamen Abschnitts (C) zum Vorwärmen des Streifens (2) aus Verpackungsmaterial befindet, und eine zweite Erwärmungseinrichtung, die sich entlang der zweiten Bahn (B) auf der Zuführseite des gemeinsamen Abschnitts (C) befindet, **dadurch gekennzeichnet, dass** die zweite Erwärmungseinrichtung so angeordnet ist, dass sie den Verschlussstreifen (3) vorwärmt, dass die erste Erwärmungseinrichtung und die zweite Erwärmungseinrichtung in Reihe zu einander geschaltet sind, und dass die Einheit des Weiteren eine Düse (32) aufweist, welche in den Bereich zwischen der zweiten Erwärmungseinrichtung (14) und dem Verschlussstreifen (3) Kaltluft leitet, wobei die Düse (32) selektiv während der Zuführung des Verschlussstreifens (3) entlang der zweiten Bahn (B) beim Hochlaufen aktiviert wird.

2. Einheit nach Anspruch 1, **dadurch gekennzeichnet, dass** die erste Erwärmungseinrichtung eine erste Düse (13) aufweist, die sich an einem Endabschnitt einer Zuführleitung (15) für Heißluftzufuhr befindet, und dass die zweite Erwärmungseinrichtung eine zweite Düse (14) aufweist, die über eine Nebenleitung mit der ersten Düse (13) verbunden ist.

3. Einheit nach Anspruch 2, **dadurch gekennzeichnet, dass** die erste Düse (13) eine Bodenwandung (16) aufweist, die mit Öffnungen (18) für die Heißluftzufuhr versehen ist, welche dem Streifen (2) aus Verpackungsmaterial zugewandt sind, wobei die zweite Düse (14) einen ersten Abschnitt (21) umfasst, der Öffnungen (30) für die Heißluftzufuhr aufweist, die dem Verschlussstreifen (3) zugewandt sind, sowie einen zweiten Abschnitt (22), der sich von dem ersten Abschnitt (21) weg erstreckt und über eine Nebenleitung mit der ersten Düse (13) verbunden ist.

## Revendications

1. Dispositif de thermosoudage (1) pour une machine d'emballage automatique, dans lequel une bande (2) de matériau d'emballage pour produits alimentaires versables et une bande de jonction (3) sont avancées respectivement le long d'un premier et d'un deuxième chemins (A, B) ayant au moins une partie commune (C) le long de laquelle la dite bande de jonction (3) est soudée à chaud sous pression à un bord longitudinal de la dite bande (2) de matériau d'emballage ; le dit dispositif (1) comprenant un premier moyen de chauffage placé le long du dit premier chemin (A), en amont de la dite partie commune (C), pour préchauffer la dite bande (2) de matériau d'emballage, et un deuxième moyen de chauffage placé le long du dit deuxième chemin (B), en amont de la dite partie commune (C),
**caractérisé en ce que** le dit deuxième moyen de chauffage est agencé pour préchauffer la dite bande de jonction (3), **en ce que** le dit premier moyen de chauffage et le dit deuxième moyen de chauffage sont mutuellement connectés en série, et **en ce que** le dispositif comprend en outré une buse (32) pour diriger de l'air froid entre le dit deuxième moyen de chauffage (14) et la dite bande de jonction (3), la dite buse (32) étant sélectivement activée pendant le démarrage de la fourniture de la dite bande de jonction (3) le long du dit deuxième chemin (B).

2. Dispositif selon la revendication 1, **caractérisé en ce que** le dit premier moyen de chauffage comprend une première buse (13) placée à une partie d'extrémité d'un conduit d'amenée d'air chaud (15), et **en ce que** le dit deuxième moyen de chauffage comprend une deuxième buse (14) branchée sur la dite première buse (13).

3. Dispositif selon la revendication 2, **caractérisé en ce que** la dite première buse (13) comprend une paroi inférieure (16) comportant des orifices de distribution d'air chaud (18) en face de la dite bande (2) de matériau d'emballage, la dite deuxième buse (14) comprenant une première partie (21) ayant des orifices de distribution d'air (30) en face de la dite bande de jonction (3) et une deuxième partie (22) s'étendant à partir de la dite première partie (21) et raccordée en branchement sur la dite première buse (13).
